(19) Europäisches Patentamt / European Patent Office / Office européen des brevets

(11) **EP 3 223 961 B1**

(12) **FASCICULE DE BREVET EUROPEEN**

(45) Date de publication et mention
de la délivrance du brevet:
**26.12.2018 Bulletin 2018/52**

(21) Numéro de dépôt: **15787975.0**

(22) Date de dépôt: **28.10.2015**

(51) Int Cl.:
**B05B 17/06** *(2006.01)* **B05B 12/08** *(2006.01)*
**B05B 12/00** *(2018.01)* **B05B 15/14** *(2018.01)*
**B06B 1/02** *(2006.01)*

(86) Numéro de dépôt international:
**PCT/EP2015/074934**

(87) Numéro de publication internationale:
**WO 2016/083058 (02.06.2016 Gazette 2016/22)**

(54) **PROCEDE DE DETECTION D'UNE INSUFFISANCE DE LIQUIDE DANS UN DISPOSITIF D'ATOMISATION PAR ULTRASONS**

VERFAHREN ZUR FESTSTELLUNG, OB EINE ZU VERNEBELNDE FLÜSSIGKEIT IN EINER ULTRASCHALLVERNEBLUNGSVORRICHTUNG VORHANDEN IST

METHOD FOR DETECTING AN ABSENCE OF LIQUID IN AN ULTRASONIC ATOMIZING APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2014 FR 1461627**

(43) Date de publication de la demande:
**04.10.2017 Bulletin 2017/40**

(73) Titulaire: **Valeo Systemes Thermiques
78320 Le Mesnil Saint Denis (FR)**

(72) Inventeurs:
• **FEUILLARD, Vincent
78322 Le Mesnil Saint-Denis Cédex (FR)**

• **SEDDAR, Nacim
78322 Le Mesnil Saint-Denis Cédex (FR)**
• **ASVINY, Samy
F-78320 Le Mesnil Saint-Denis (FR)**

(74) Mandataire: **Metz, Gaëlle
Valeo Systèmes Thermiques
8, rue Louis Lormand
CS 80517 La Verrière
78322 Le Mesnil Saint Denis Cedex (FR)**

(56) Documents cités:
EP-A1- 2 047 914     WO-A1-2004/039442
WO-A1-2011/091002   WO-A1-2015/010809
DE-A1- 3 013 964     GB-A- 2 291 605
US-A1- 2002 129 813  US-A1- 2009 114 737

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne les distributeurs de liquide, communément nommés atomiseurs, qui permettent de diffuser de manière précise, au moyen d'émetteurs à ultrasons, typiquement des éléments piézoélectriques, des fluides sous forme de microgouttelettes ou d'aérosols. L'invention a plus particulièrement pour objet un procédé de détection d'une insuffisance de liquide dans un atomiseur. Elle a également pour objet un dispositif d'atomisation de liquide par ultrasons permettant de mettre en oeuvre ledit procédé.

La distribution de liquides, quelle que soit leur nature (huileuse, aqueuse ou alcoolique), qu'il s'agisse de solutions ou de suspensions (particules en suspension dans un liquide), s'effectue dans un grand nombre d'applications par micronisation, atomisation, nébulisation ou génération d'aérosols. Les principales applications utilisant ces dispositifs de distribution de fluide concernent l'administration de médicaments, la diffusion de produits cosmétiques, en particulier les parfums, la désinfection, la génération d'odeur, l'humidification de l'air ou de supports tels que du papier ou des textiles et la distribution de réactifs biologiques. L'invention concerne plus particulièrement l'utilisation de tels atomiseurs dans des systèmes de climatisation pour véhicule automobile.

Il existe différents types d'atomiseurs de liquide. Dans un premier type d'atomiseurs, tel que décrit par exemple dans les documents EP 0 516 565 et FR 2 899 135, un dispositif de pulvérisation de liquide comporte une cuve ouverte dans sa partie supérieure, apte à contenir un liquide à pulvériser, et un diffuseur de liquide pulvérisé agencé dans la cuve. Le diffuseur comprend une buse contenant du liquide provenant de la cuve, et un émetteur à ultrasons, typiquement un élément piézoélectrique, apte à émettre des ondes ultrasonores dans ce liquide de façon à le pulvériser, ce dispositif étant couramment appelé fontaine acoustique.

L'émetteur à ultrasons vibre à haute fréquence afin de générer les ondes ultrasonores, et doit donc être constamment refroidi afin d'éviter sa détérioration par surchauffe. A cet effet, on prévoit que cet émetteur à ultrasons est constamment immergé dans le liquide à pulvériser, ce liquide permettant de refroidir l'émetteur à ultrasons. Ainsi, la pulvérisation de liquide est habituellement interrompue avant que tout le liquide recouvrant l'émetteur à ultrasons ne soit pulvérisé, afin d'empêcher toute vibration de cet émetteur à ultrasons sans qu'il ne soit immergé dans le liquide.

Généralement, le niveau minimum prédéterminé correspond au niveau minimum de liquide nécessaire pour que l'émetteur à ultrasons fonctionne sans surchauffer. Un capteur de niveau de liquide permet de s'assurer que la quantité de liquide présente est suffisante.

On connaît également, tel que décrit par exemple dans le document EP 2 091 663, un atomiseur de liquide par ultrasons comprenant un transducteur piézoélectrique et une membrane micro-perforée soumise à vibration. La membrane peut également ne pas être soumise à vibration, tel que décrit dans le document US 2008/0217430. Les gouttelettes sont formées par éjection du liquide à travers les trous de la membrane lors de la variation de pression dynamique due à la vibration d'un transducteur piézoélectrique.

Dans ce type d'atomiseur à membrane, il est important de protéger le transducteur de l'atomiseur. En effet, s'il n'y a plus de liquide, le transducteur va se retrouver à l'air libre. Comme le signal de commande de l'élément piézoélectrique reste constant, l'amplitude de mouvement de la membrane oscillante va augmenter, ce qui entraîne un risque de cassure de la membrane.

L'invention vise à remédier à ces inconvénients, et ceci sans capteur additionnel, donc à moindre coût.

L'invention a ainsi pour objet un procédé de détection d'une insuffisance de liquide dans un dispositif d'atomisation par ultrasons selon la revendication 1.

Ainsi, en comparant l'intensité du courant électrique renvoyé par l'élément piézoélectrique à une valeur seuil prédéterminée correspondant à un fonctionnement du dispositif en présence suffisante de liquide, on peut détecter si du liquide est présent ou non en quantité suffisante dans le dispositif d'atomisation. Grâce à ce procédé, on peut ainsi détecter une insuffisance voire une absence de liquide dans le dispositif.

L'étape de mise sous tension temporaire de l'élément piézoélectrique comprend une étape d'application d'une tension électrique aux bornes de l'élément piézoélectrique, de manière à provoquer une déformation de l'élément piézoélectrique, suivie d'une étape de commande de l'arrêt de l'application de la tension électrique.

L'étape de mesure de l'intensité du courant électrique produit par l'élément piézoélectrique sous l'action de sa déformation est effectuée pendant la période suivant ledit arrêt et au cours de laquelle l'élément piézoélectrique continue à se déformer.

Le dispositif d'atomisation par ultrasons peut comprendre un transducteur piézoélectrique muni dudit élément piézoélectrique et d'une membrane perforée fixée sur le transducteur et mise en vibration par l'élément piézoélectrique de manière à atomiser un liquide en contact avec ladite membrane. L'invention peut toutefois s'appliquer à tout type de dispositif d'atomisation piézoélectrique. L'invention est ainsi applicable à un système piézoélectrique de type fontaine acoustique, ou encore à un système piézoélectrique à membrane ou grille sans transducteur, c'est-à-dire sans support intermédiaire entre la membrane et l'élément piézoélectrique, dont une des faces est directement en contact avec de l'eau, l'autre face étant en contact avec de l'air.

Le procédé peut comprendre en outre, dans le cas où une insuffisance de liquide est détectée, une étape de commande de l'arrêt définitif de l'application de la tension électrique.

Le procédé peut comprendre en outre, dans le cas où une insuffisance de liquide est détectée, une étape de déclenchement d'un signal sonore et/ou d'un signal lumineux.

L'élément piézoélectrique est typiquement une céramique piézoélectrique.

L'invention a également pour objet un dispositif d'atomisation de liquide par ultrasons selon la revendication 4.

Le dispositif peut comprendre un réservoir de liquide fermé par un bouchon. Le réservoir peut être une bouteille d'eau minérale. Le système peut ainsi intégrer un circuit d'eau, une pompe, et une bouteille d'eau minérale servant de réservoir.

Le dispositif peut comprendre un transducteur piézoélectrique muni d'au moins un élément piézoélectrique apte à atomiser le liquide, le transducteur comprenant une cavité contenant le liquide à atomiser.

En particulier, le dispositif peut comprendre un transducteur piézoélectrique muni dudit élément piézoélectrique et d'une membrane perforée fixée sur le transducteur et mise en vibration par l'élément piézoélectrique de manière à atomiser un liquide en contact avec ladite membrane.

Le rapport de la longueur totale du transducteur sur le diamètre ou la largeur de l'élément piézoélectrique est avantageusement supérieur ou égal à 1.

L'invention a également pour objet un système de climatisation comprenant un dispositif décrit ci-dessus.

Le système de climatisation peut être un système de climatisation pour véhicule automobile.

D'autres buts, caractéristiques et avantages de la présente invention apparaîtront à la lecture de la description suivante, donnée uniquement à titre d'exemple non limitatif, et fait en référence aux dessins annexés, sur lesquels :

- la figure 1 est une vue en coupe longitudinale d'un dispositif d'atomisations par ultrasons apte à mettre en oeuvre le procédé selon l'invention,
- la figure 2 est une vue partielle en perspective éclatée du transducteur du dispositif de la figure 1,
- la figure 3 est un schéma électronique du dispositif de la figure 1 permettant la mise en oeuvre du procédé, et
- la figure 4 illustre sous forme de schémas-blocs les différentes étapes du procédé.

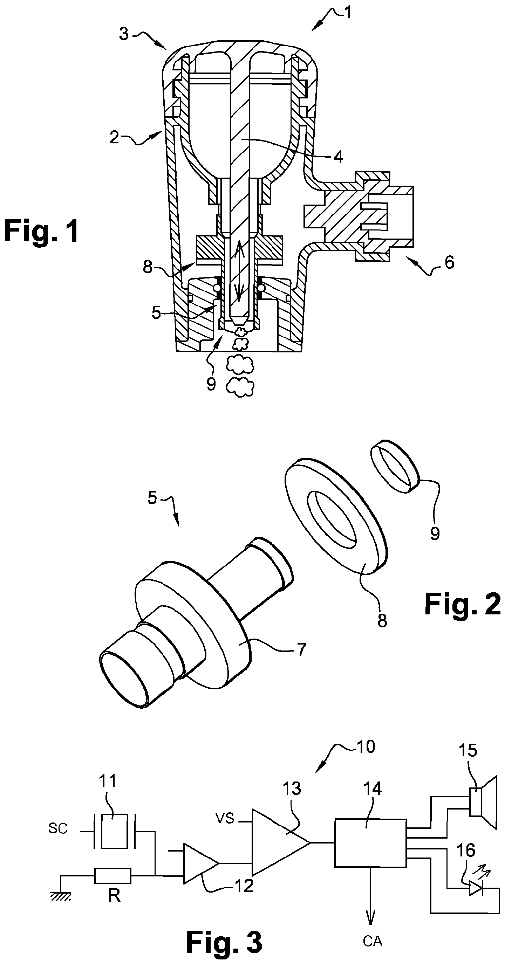

Tel qu'illustré à la figure 1, un dispositif 1 d'atomisation par ultrasons comprend un réservoir de liquide 2 refermé par un bouchon 3. Le bouchon 3 peut être muni d'une tige 4 favorisant l'évacuation des bulles d'air. A l'intérieur du réservoir 2 est disposé, outre le liquide, un transducteur piézoélectrique 5. Dans un mode de réalisation non représenté, le transducteur piézoélectrique 5 est disposé à l'extérieur du réservoir 2 et le dispositif comprend un conduit permettant d'amener le liquide du réservoir 2 vers ledit transducteur piézoélectrique 5.

Le dispositif 1 comprend, par ailleurs, un connecteur 6 électrique qui permet d'alimenter électriquement le transducteur piézoélectrique 5.

Tel qu'illustré à la figure 2, le transducteur piézoélectrique 5 comprend un corps de transducteur 7, que l'on fait vibrer, de préférence dans un intervalle de fréquence allant de 50 kHz à 200 kHz. Le corps de transducteur 7 comprend une cavité contenant le liquide à atomiser.

Un ou plusieurs éléments piézoélectriques 8, constitués de préférence d'une céramique piézoélectrique monobloc ou multicouche, sont disposés sur le corps de transducteur 7. Une membrane micro-perforée 9 ou une grille, de faible épaisseur (par exemple entre 20 à 200 $\mu$m) est fixée mécaniquement au bout du corps de transducteur 7 où sa vitesse vibratoire est maximale. Les gouttelettes de liquide sont formées par éjection du liquide à travers les trous de la membrane 9.

Cet ensemble constitue le transducteur piézoélectrique 5 qui est un convertisseur électromécanique vibrant suivant un mode longitudinal. Un mode longitudinal est défini par le fait que le transducteur 5 se déforme suivant son axe de symétrie par élongation ou contraction de sa section (l'axe de symétrie du transducteur 5 est notamment ici un axe sensiblement orthogonal au plan d'extension principal du transducteur 5). Le comportement vibratoire de ce type de transducteur est gouverné essentiellement par sa longueur, de telle manière que le ratio longueur total du transducteur sur le diamètre ou largeur de la céramique piézoélectrique 8 est, préférentiellement, supérieur ou égal à 1.

Un nébuliseur composé d'un actionneur piézoélectrique est basé sur l'effet piézoélectrique inverse : l'application d'une tension électrique aux bornes de l'élément piézoélectrique provoque une déformation mécanique dudit élément.

C'est le fait de faire osciller la membrane 9 qui est d'un côté en contact avec de l'air et de l'autre avec le liquide, par exemple de l'eau, ce qui a pour effet de provoquer la nébulisation.

Une des particularités des éléments piézoélectriques est qu'ils possèdent une fréquence de résonance bien précise qui peut se modéliser électriquement.

On peut modéliser électriquement un élément piézoélectrique par une simple capacité. Toutefois, la particularité de la technologie piézoélectrique réside dans le couplage électromécanique. Du fait qu'on s'intéresse ici à une application d'oscillateur mécanique, on rajoute en parallèle un circuit RLC série modélisant l'oscillation mécanique.

Voici l'expression de l'impédance équivalente de l'élément piézoélectrique (s=j$\omega$) :

$$Z(s) = \frac{s^2 + s\frac{R_1}{L_1} + \omega_s{}^2}{(s \cdot C_0)[s^2 + s\frac{R_1}{L_1} + \omega_p{}^2]}$$

$$\Rightarrow \omega_s = \frac{1}{\sqrt{L_1 \cdot C_1}}, \quad \omega_p = \sqrt{\frac{C_1 + C_0}{L_1 \cdot C_1 \cdot C_0}} = \omega_s \sqrt{1 + \frac{C_1}{C_0}} \approx \omega_s \left(1 + \frac{C_1}{2C_0}\right) \quad (C_0 \gg C_1)$$

On observe ici deux pulsations particulières :

- $\omega_s$ : pulsation série qui correspond à la fréquence dite d'antirésonance. La pulsation série correspond au minimum du module de l'amplitude de l'impédance équivalente de l'élément piézoélectrique.
- $\omega_p$ : pulsation parallèle qui correspond à la fréquence dite de résonance. La pulsation parallèle correspond au maximum du module de l'amplitude de l'impédance équivalente de l'élément piézoélectrique.

On observe qu'à partir du moment où l'on s'éloigne de cette fréquence de résonance, le déphasage entre l'intensité et la tension évolue.

Il est important de protéger le transducteur 5 du nébuliseur. En effet s'il n'y a plus suffisamment d'eau, le transducteur 5 va se retrouver totalement ou partiellement à l'air libre, cependant le signal de commande de l'élément piézoélectrique 8 ne changeant pas, l'amplitude de mouvement de la membrane oscillante 9 va alors augmenter et il y aura un risque de cassure.

Lorsqu'il n'y a plus d'eau, la fréquence de résonance change également. En effet, du fait de l'insuffisance ou de l'absence d'eau, la fréquence d'oscillation augmente ce qui a une influence sur l'intensité du courant électrique produit par l'élément piézoélectrique sous l'action de sa déformation.

On peut donc détecter le fait qu'il n'y ait plus d'eau ou plus suffisamment d'eau par ce décalage en fréquence : le transducteur 5 n'est plus situé à la fréquence de résonance du matériau piézoélectrique. Cela a pour conséquences : le déphasage entre la tension et l'intensité va évoluer, et l'intensité du courant électrique produit par l'élément piézoélectrique sous l'action de sa déformation va diminuer.

Le procédé selon l'invention utilise cette constatation : si l'intensité du courant électrique produit par l'élément piézoélectrique sous l'action de sa déformation est inférieure à une valeur seuil, on considère qu'il y a une insuffisance de liquide dans le dispositif d'atomisation.

En effet, l'intensité étant proportionnelle à la tension (U=Z.I) et la tension étant proportionnelle à la pression exercée sur l'élément piézoélectrique (U=S.P avec S =constante de sensibilité = S = k.h avec k = constante piézoélectrique et h= largeur du cristal), l'intensité est donc proportionnelle à la pression exercée sur l'élément piézoélectrique ; il est à noter que cette pression diminue davantage quand le milieu en contact de l'élément piézoélectrique n'est plus de l'eau, mais de l'air.

Un moyen de détection du changement de milieu est par exemple la lecture de l'intensité à l'aide d'un shunt. Un shunt est un dispositif de très faible impédance qui permet au courant de passer d'un point à un autre d'un circuit électrique en utilisant très peu d'énergie. On peut utiliser comme shunt de mesure une résistance de faible valeur permettant de mesurer le courant électrique la traversant. Un shunt est une résistance calibrée et connue utilisée pour la mesure de courants forts. Pour ce faire, on mesure la tension à ses bornes à l'aide d'un voltmètre branché en parallèle, l'utilisation de la loi d'Ohm permettant de déduire le courant traversant le shunt.

En comparant la valeur de l'intensité à une valeur seuil correspondant au fonctionnement normal de la membrane en contact avec de l'eau, on détecte le décalage en fréquence et donc la chute de la consommation du courant. Après avoir détecté l'absence ou l'insuffisance d'eau, il est important de mettre le matériau piézoélectrique en protection, mais aussi de prévenir l'utilisateur à l'aide d'un avertisseur sonore et/ou d'un signal lumineux (par exemple une diode électroluminescente). Pour ce faire, un signal électronique de commande est généré qui permet de commander, par exemple, le déclenchement d'un signal sonore et/ou d'un signal lumineux.

La figure 3 est un schéma électronique de principe illustrant un dispositif 10 permettant la mise en oeuvre d'un procédé selon l'invention.

Un élément piézoélectrique 11 de résistance R est connecté à un amplificateur de courant 12. La valeur de l'intensité étant assez faible, il est en effet préférable de l'amplifier avant de la comparer à une valeur seuil (en pratique, c'est la tension mesurée, représentative du courant, qui est amplifiée). Un comparateur 13 de type shunt permet de comparer la tension aux bornes du shunt à une tension de référence $V_s$. De manière équivalente, le comparateur 13 peut comparer l'intensité traversant le shunt à une intensité de référence. Un microprocesseur 14 permet alors de commander l'arrêt de l'élément piézoélectrique 11 si la tension mesurée ou l'intensité mesurée est inférieure à une valeur seuil correspondant à un fonctionnement normal de la membrane 9 en contact avec du liquide. Le microprocesseur 14 peut en outre commander le déclenchement d'un signal sonore 15 et/ou d'un signal lumineux 16 pour avertir l'usager de l'insuffisance de liquide.

Le dispositif 10 d'atomisation de liquide par ultrasons selon l'invention peut ainsi comprendre au moins un élément piézoélectrique 11 apte à atomiser un liquide, des moyens aptes à mettre sous tension temporairement l'élément piézoélectrique 11, de manière à provoquer une déformation de l'élément piézoélectrique 11, des moyens aptes à mesurer l'intensité du courant électrique produit par l'élément piézoélectrique 11 sous l'action de sa déformation, des moyens (par exemple le comparateur 13) aptes à comparer ladite intensité avec une valeur seuil prédéterminée, et des moyens (par exemple le microprocesseur 14) aptes à détecter une insuffisance de liquide dans le dispositif d'atomisation 1 si ladite intensité est inférieure à ladite valeur seuil.

A titre d'exemple, l'élément piézoélectrique 11 peut être alimenté normalement pendant 0,9 s, par effet piézoélectrique. Le signal électrique va alors exciter l'élément piézoélectrique 11 et générer le mouvement vibratoire. Ensuite, pendant 0,1 s, l'élément piézoélectrique 11 n'est plus alimenté, mais continue à vibrer, par inertie. Il se comporte alors comme un capteur résistif (jauge de contrainte). C'est à ce moment que la « réponse » de l'élément piézoélectrique 11 est mesurée par effet piézoélectrique inverse : l'élément piézoélectrique 11, encore en mouvement, génère un signal électrique dont le courant est mesuré, et qui est comparé à une valeur de référence correspondant à un fonctionnement normal de la membrane 9 en contact avec le liquide. Si l'écart dépasse une valeur seuil, alors on arrête la mise sous tension de l'élément piézoélectrique 11 et l'alerte est donnée.

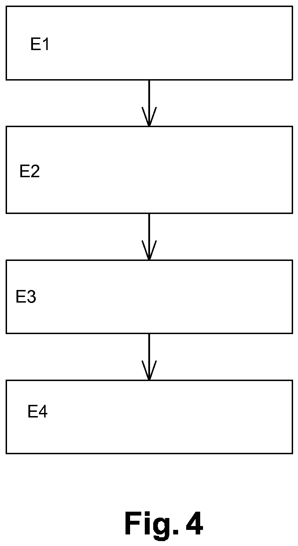

Les différentes étapes du procédé sont ainsi reprises sur la figure 4. Le procédé débute par une étape E1 de mise sous tension temporaire de l'élément piézoélectrique, de manière à provoquer une déformation de l'élément piézoélectrique. Cette étape E1 est suivie d'une étape E2 de mesure de l'intensité du courant électrique produit par l'élément piézoélectrique sous l'action de sa déformation. Le procédé se poursuit par une étape E3 comparaison de ladite intensité avec une valeur seuil prédéterminée, une insuffisance de liquide dans le dispositif d'atomisation étant détectée si ladite intensité est inférieure à ladite valeur seuil (étape E4).

**Revendications**

1. Procédé de détection d'une insuffisance de liquide dans un dispositif (1) d'atomisation par ultrasons, le dispositif (1) comprenant au moins un élément piézoélectrique (8) apte à atomiser un liquide, le procédé étant **caractérisé en ce qu'**il comprend :

   - une étape (E1) de mise sous tension temporaire de l'élément piézoélectrique (8), de manière à provoquer une déformation de l'élément piézoélectrique (8),
   - une étape (E2) de mesure de l'intensité du courant électrique produit par l'élément piézoélectrique (8) sous l'action de sa déformation, et
   - une étape (E3) de comparaison de ladite intensité avec une valeur seuil prédéterminée, une insuffisance de liquide dans le dispositif d'atomisation (1) étant détectée si ladite intensité est inférieure à ladite valeur seuil (E4),

   l'étape de mise sous tension temporaire de l'élément piézoélectrique (8) comprenant une étape d'application d'une tension électrique aux bornes de l'élément piézoélectrique (8), de manière à provoquer une déformation de l'élément piézoélectrique (8), suivie d'une étape de commande de l'arrêt de l'application de la tension électrique, **caractérisé en ce que** l'étape de mesure de l'intensité du courant électrique produit par l'élément piézoélectrique (8) sous l'action de sa déformation est effectuée pendant la période suivant ledit arrêt et au cours de laquelle l'élément piézoélectrique (8) continue à se déformer.

2. Procédé selon la revendications 1, **caractérisé en ce qu'**il comprend en outre, dans le cas où une absence de liquide est détectée, une étape de commande de l'arrêt définitif de l'application de la tension électrique.

3. Procédé selon la revendication 1 ou 2, **caractérisé en ce qu'**il comprend en outre, dans le cas où une absence de liquide est détectée, une étape de déclenchement d'un signal sonore et/ou d'un signal lumineux.

4. Dispositif (10) d'atomisation de liquide par ultrasons apte à mettre en oeuvre le procédé de détection d'une insuffisance de liquide selon l'une quelconque des revendications 1 à 3, comprenant au moins un élément piézoélectrique (8) apte à atomiser un liquide, le dispositif étant **caractérisé en ce qu'**il comprend des moyens aptes à mettre sous tension temporairement l'élément piézoélectrique (8) de manière à provoquer une déformation de l'élément piézoélectrique (8), des moyens aptes à mesurer l'intensité du courant électrique produit par l'élément piézoélectrique (8) sous l'action de sa déformation, des moyens (13) aptes à comparer ladite intensité avec une valeur seuil prédéterminée, et des moyens (14) aptes à détecter une insuffisance de liquide dans le dispositif d'atomisation (1) si ladite intensité est inférieure à ladite valeur seuil.

5. Dispositif (10) selon la revendication 4, **caractérisé en ce qu'**il comprend un transducteur piézoélectrique (5) muni dudit élément piézoélectrique (8) et d'une membrane perforée (9) fixée sur le transducteur (5) et mise en vibration par l'élément piézoélectrique (8) de manière à atomiser un liquide en contact avec ladite membrane (9).

6. Dispositif (10) selon la revendication 5, **caractérisé en ce que** le transducteur (5) comprend une cavité contenant le liquide à atomiser.

7. Dispositif (10) selon la revendication 5 ou 6, **caractérisé en ce que** le rapport de la longueur totale du transducteur (5) sur le diamètre ou la largeur de l'élément piézoélectrique (8) est supérieur ou égal à 1.

8. Système de climatisation, **caractérisé en ce qu'**il comprend un dispositif (10) selon l'une des revendications 4 à 7.


**Patentansprüche**

1. Verfahren zur Erfassung eines Flüssigkeitsmangels in einer Vorrichtung (1) zur Ultraschallzerstäubung, wobei die Vorrichtung (1) mindestens ein piezoelektrisches Element (8) enthält, das eine Flüssigkeit zerstäuben kann, wobei das Verfahren **dadurch gekennzeichnet ist, dass** es enthält:

   - einen Schritt (E1) des vorübergehenden Anlegens von Spannung an das piezoelektrische Element (8), um eine Verformung des piezoelektrischen Elements (8) zu bewirken,
   - einen Schritt (E2) des Messens der Stärke des vom piezoelektrischen Element (8) unter der Wirkung seiner Verformung erzeugten elektrischen Stroms, und
   - einen Schritt (E3) des Vergleichs der Stärke mit einem vorbestimmten Schwellwert, wobei ein Flüssigkeitsmangel in der Zerstäubungsvorrichtung (1) erfasst wird, wenn die Stärke niedriger als der Schwellwert ist (E4),

   wobei der Schritt des vorübergehenden Anlegens von Spannung an das piezoelektrische Element (8) einen Schritt des Anlegens einer elektrischen Spannung an die Klemmen des piezoelektrischen Elements (8) enthält, um eine Verformung des piezoelektrischen Elements (8) zu bewirken, gefolgt von einem Schritt der Steuerung des Beendens des Anlegens der elektrischen Spannung,
   **dadurch gekennzeichnet, dass** der Schritt des Messens der Stärke des vom piezoelektrischen Element (8) unter der Wirkung seiner Verformung erzeugten elektrischen Stroms während der Periode ausgeführt wird, die auf das Beenden folgt und während der das piezoelektrische Element (8) sich weiter verformt.

2. Verfahren nach Anspruch 1, **dadurch gekennzeichnet, dass** es außerdem in dem Fall, in dem eine Abwesenheit von Flüssigkeit erfasst wird, einen Schritt zum Steuern des endgültigen Beendens des Anlegens der elektrischen Spannung enthält.

3. Verfahren nach Anspruch 1 oder 2, **dadurch gekennzeichnet, dass** es außerdem in dem Fall, in dem eine Abwesenheit von Flüssigkeit erfasst wird, einen Schritt des Auslösens eines akustischen Signals und/oder eines Lichtsignals enthält.

4. Vorrichtung (10) zur Ultraschallzerstäubung von Flüssigkeit, die das Verfahren zur Erfassung eines Flüssigkeitsmangels nach einem der Ansprüche 1 bis 3 durchführen kann, die mindestens ein piezoelektrisches Element (8) enthält, das eine Flüssigkeit zerstäuben kann, wobei die Vorrichtung **dadurch gekennzeichnet ist, dass** sie Einrichtungen, die vorübergehend Spannung an das piezoelektrische Element (8) anlegen können, um eine Verformung des piezoelektrischen Elements (8) zu bewirken, Einrichtungen, die die Stärke des vom piezoelektrischen Element (8) unter der Wirkung seiner Verformung erzeugten elektrischen Stroms messen können, Einrichtungen (13), die die Stärke mit einem vorbestimmten Schwellwert vergleichen können, und Einrichtungen (14) enthält, die einen Flüssigkeitsmangel in der Zerstäubungsvorrichtung (1) erfassen können, wenn die Stärke niedriger als der Schwellwert ist.

5. Vorrichtung (10) nach Anspruch 4, **dadurch gekennzeichnet, dass** sie einen piezoelektrischen Wandler (5) enthält, der mit dem piezoelektrischen Element (8) und mit einer gelochten Membran (9) versehen ist, die am Wandler (5) befestigt ist und vom piezoelektrischen Element (8) in Schwingung versetzt wird, um eine Flüssigkeit in Kontakt mit der Membran (9) zu zerstäuben.

6. Vorrichtung (10) nach Anspruch 5, **dadurch gekennzeichnet, dass** der Wandler (5) einen Hohlraum enthält, der die zu zerstäubende Flüssigkeit enthält.

7. Vorrichtung (10) nach Anspruch 5 oder 6, **dadurch gekennzeichnet, dass** das Verhältnis der Gesamtlänge des Wandlers (5) zum Durchmesser oder zur Breite des piezoelektrischen Elements (8) größer als oder gleich 1 ist.

8. Klimaanlage, **dadurch gekennzeichnet, dass** sie eine Vorrichtung (10) nach einem der Ansprüche 4 bis 7 aufweist.

**Claims**

1. Method for detecting insufficient liquid in an ultrasound spraying device (1), the device (1) comprising at least one piezoelectric element (8) capable of spraying a liquid, the method being **characterized in that** it comprises:

   - a step (E1) of provisionally supplying power to the piezoelectric component (8), so as to cause a deformation of the piezoelectric component (8),
   - a step (E2) of measuring the intensity of the electrical current produced by the piezoelectric component (8) under the deformation thereof, and
   - a step (E3) of comparing said intensity with a predetermined threshold value, insufficient liquid being detected in the spraying device (1) if said intensity is lower than said threshold value (E4), the step of provisionally supplying power to the piezoelectric component (8) comprising a step of applying an electric voltage across the terminals of the piezoelectric component (8), so as to cause deformation of the piezoelectric component (8), followed by a step for controlling the shut down of the application of the electrical voltage,

   **characterized in that** the step of measuring the intensity of the electrical current produced by the piezoelectric element (8) under the action of its deformation is carried out during the period after said shut down and during which the piezoelectric component (8) continues to deform.

2. Method according to Claim 1, **characterized in that** it further comprises, in the case where an absence of liquid is detected, a step of controlling the final shut down of the application of the electrical voltage.

3. Method according to Claim 1 or 2, **characterized in that** it further comprises, in the case where an absence of liquid is detected, a step of triggering an audible signal and/or a light signal.

4. Ultrasound liquid spraying device (10) capable of implementing the method for detecting insufficient liquid therein according to any one of Claims 1 to 3, comprising at least one piezoelectric component (8) capable of spraying a liquid, the device being **characterized in that** it comprises means capable of temporarily energizing the piezoelectric component (8) so as to cause a deformation of the piezoelectric component (8), means capable of measuring the intensity of the electrical current produced by the piezoelectric component (8) under the action of its deformation, means (13) capable of comparing said intensity with a predetermined threshold value, and means (14) capable of detecting a insufficient liquid in the spraying device (1) if said intensity is lower than said threshold value.

5. Device (10) according to Claim 4, **characterized in that** it comprises a piezoelectric transducer (5) provided with said piezoelectric element (8) and a perforated membrane (9) fixed on the transducer (5) and vibrated by the piezoelectric component (8) so as to spray a liquid in contact with said membrane (9).

6. Device (10) according to Claim 5, **characterized in that** the transducer (5) comprises a cavity containing the liquid to be sprayed.

7. Device (10) according to Claim 5 or 6, **characterized in that** the ratio of the total length of the transducer (5) to the diameter or the width of the piezoelectric component (8) is greater than or equal to 1.

8. Air conditioning system, **characterized in that** it comprises a device (10) according to any one of Claims 4 to 7.

**Fig. 1**

**Fig. 2**

**Fig. 3**

E1

E2

E3

E4

# Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0516565 A
- FR 2899135
- EP 2091663 A
- US 20080217430 A